# EUROPÄISCHE PATENTSCHRIFT

(11) **EP 0 575 023 B1**
(45) Veröffentlichungstag und Bekanntmachung des Hinweises auf die Patenterteilung: **02.10.1996**
(21) Anmeldenummer: 93250165.3
(22) Anmeldetag: 15.06.1993
(51) Int. Cl.: H02P 3/04, B66C 13/30

(54) **Ansteuerschaltung für eine gleichstrombetätigte Bremse eines Elektromotors**
Drive-circuit for a DC-operated brake of an electromotor
Circuit d'amorçage pour le frein, fonctionnant par courant continu, d'un moteur électrique

(30) Priorität: 16.06.1992 DE 4220122
(43) Veröffentlichungstag der Anmeldung: 22.12.1993
(73) Patentinhaber: MANNESMANN Aktiengesellschaft, D-40027 Düsseldorf (DE)
(72) Erfinder: Augenreich, Klaus, D-2000 Wedel (DE)
(74) Vertreter: Presting, Hans-Joachim, Dipl.-Ing.

(56) Entgegenhaltungen:
- EP-A- 0 097 237
- EP-A- 0 386 767
- SU-A- 826 536

## Beschreibung

Die Erfindung betrifft eine Ansteuerschaltung für eine gleichstrombetätigte Bremse eines Elektromotors, insbesondere eines polumschaltbaren Drehstrommotors gemäß dem Oberbegriff des Anspruches 1.

Derartige Elektromotoren werden auch als Bremsmotoren bezeichnet und u.a. für den Antrieb Von Hebezeugen verwendet. Bei diesem Einsatzfall und solchen mit vergleichbaren Randbedingungen ist es aus Sicherheitsgründen zwingend erforderlich, daß die Bremse nach Ausschalten der Netzversorgung des Motors schnell anspricht, um ein Nachsacken einer an dem Hebezeug hängenden Last zu verhindern und außerdem nach Einschalten der Netzversorgung des Motors die Bremse schnell wieder gelüftet wird, um ein Anlaufen des Motors gegen die Bremse zu verhindern. Hierdurch wird der Verschleiß an den Belägen der Bremse minimiert.

Aus der DE 36 13 294 C2 ist eine Bremse für einen Wechselstrommotor bekannt. Der Motor wird im Ruhezustand durch die über Federwirkung angestellte Bremse blockiert. Die Lüftung der Bremse für den Betriebszustand des Motors erfolgt durch einen gleichstrombetätigten Elektromagneten. Der Elektromagnet weist eine in eine Beschleunigungswicklung und in eine Haltewicklung geteilte Gesamtspule auf, wobei die beiden Wicklungen in Reihe geschaltet sind. Zum Lüften der Bremse wird zunächst nur die Beschleunigungsspule nach Anlegen der Netzspannung an den Motor mit Strom beaufschlagt. Da die Beschleunigungsspule einen kleineren Innenwiderstand als die Gesamtspule aufweist, fließt ein großer Strom, der einen großen magnetischen Fluß und somit eine schnelle Anzugswirkung und eine kleine Ansprechzeit der Bremse bewirkt. Da nach dem Ansprechen der Bremse der Luftspalt zwischen der Spule und dem Anker des Elektromagneten verringert und somit der magnetische Widerstand erhöht wurde, sind nur noch geringere Haltekräfte bzw. Halteströme als beim Ansprechen des Elektromagneten erforderlich. Daher erfolgt über ein Zeitschaltglied nach Lüftung der Bremse eine Umschaltung des Bremsenstroms auf die Gesamtspule. Aufgrund des größeren Widerstands der Gesamtspule fließt nun ein geringerer Haltestrom. Um ein schnelles Abschalten des Elektromagneten bzw. Greifen der Bremse zu erreichen, ist die Haltewicklung der Spule in einem Freilaufkreis mit einer Freilaufdiode angeordnet. Eine zusätzliche Beschleunigung der Schnellabschaltung erfolgt durch die Anordnung eines Varistors in dem Freilaufkreis, durch den dieser hochohmig geschaltet werden kann. Der Abschaltvorgang der Bremse bzw. deren Gesamtspule erfolgt, wenn der Strom in einer Phase der Motorwicklung gegen Null läuft.

Die vorbeschriebene Bremse für einen Wechselstrommotor erweist sich als nachteilig, da die Energieversorgung der Bremse nur über einen einzigen Leitungskreis einpulsig erfolgt. Diese Art der Energieversorgung führt zu entsprechend unsymmetrischen Strömen, wodurch die Wiederholbereitschaft für den Stoßstrom der Beschleunigerspule herabgesetzt wird. Ein Tippbetrieb für schnelle Bremsmotoren mit Wiederholintervallen für den Stoßstrom von ca. 100 ms ist hiermit schwer realisierbar. Darüber hinaus erweist sich der Aufbau der Gesamtspule aus zwei unterschiedlichen Spulenteilen als sehr aufwendig und somit teuer. Bei Verwendung der Bremse für eine gesamte Motorenreihe erweist sich die meßtechnische Beherrschung der Wicklungsströme der verschiedenen Motoren als schwierig, zumal die Gesamtspule und deren Ansteuerschaltung den weiten Bereich ausgehend von dem Leerlaufstrom des kleinsten Motors und dem Anlaufstrom des größten Motors berücksichtigen müssen. Außerdem ist das Verhältnis von Beschleunigungsstrom zu dem dauernd anstehenden Haltestrom des Elektromagneten nachteiligerweise über die Auslegung der Beschleunigungsspule und der Haltespule fest vorgegeben. Darüber hinaus ist aus thermischen Gründen und aus Platzgründen eine günstige Unterbringung der Bauelemente in dem Klemmenkasten des Elektromotors nicht möglich.

Der Erfindung liegt die Aufgabe zugrunde, eine schaltungstechnisch einfach aufgebaute Ansteuerschaltung für gleichstrombetätigte Bremsen eines Elektromotors, insbesondere eines polumschaltbaren Drehstrommotors zu schaffen, die minimierte Schaltzeiten der Bremse und gleichzeitig eine hohe Wiederholbereitschaft des Schaltvorganges der Bremse ermöglicht.

Diese Aufgabe wird bei einer Ansteuerschaltung für gleichstrombetätigte Bremsen eines Elektromotors gemäß dem Oberbegriff des Anspruches 1 durch die kennzeichnenden Merkmale des Anspruches 1 gelöst. Vorteilhafte Ausgestaltungen der Erfindung sind in den Unteransprüchen 2 bis 11 angegeben.

Der Grundgedanke der Erfindung besteht darin, durch die Anordnung von einem elektronischen Schaltelement in einem Freilaufkreis der Bremsenspule und einem weiteren elektronischen Schaltelement in dem Spulenkreis und deren parallelen Ansteuerung über ein Schaltsystem zum Ein- bzw. Ausschalten der Bremsenspule sowie der Ansteuerung des Schaltelementes im Spulenkreis zunächst voll durchsteuernd zum Übererregen der Spule und anschließend pulsweitendmodulierend zum Begrenzen der Spulenspannung auf eine Haltespannung, die Ansprechzeiten der Spule der gleichstrombetätigten Bremse zu minimieren und somit deren Wiederholbereitschaft zu steigern. Insbesondere bei polumschaltbaren Drehstrommotoren wird durch die Führung jeder Phase der Motorwicklungen auf eine Gleichrichterschaltung, um somit durch Zuordnung einer Schutzschaltung zu der Gleichrichterschaltung ermöglicht, die gesamte Ansteuerschaltung, bestehend aus Gleichrichterschaltung und einem Schaltsystem, die Spule der Bremse für den Motor und die Wicklungen des Motors vor Überspannungen zu schützen. Die Kombination der Schutzschaltung mit der erfindungsgemäßen parallelen Ansteuerung der beiden und der pulsweitenmodulierten Ansteuerung des einen elektronischen Schaltelementes führt zu einer Ansteuerschaltung, die bei hoher Schaltleistung und geringen Aufwand für den Schutz der Motorwicklungen eine sehr kompakte Bauweise bietet.

Des weiteren erweist sich als vorteilhaft, das Schaltelement für die Spule über ein Zeitglied und pulsweitenmoduliert zu schalten, um die Ansteuerspannung, die Haltespannung sowie die Impulsdauer der Ansteuerspannung den Anforderungen anzupassen, ohne innerhalb einer Motorenreihe die Bremsenspule austauschen zu müssen. Ferner wird durch das pulsweitenmodulierte Schaltelement die Haltespannung der Spule nach voller Durchschaltung auf die Nennspannung zurückgenommen, so daß die thermische Belastung der Bremsspule minimiert wird und somit eine Unterbringung der kompletten Ansteuerschaltung in einem Klemmenkasten eines Motors möglich ist. Auch erweist sich als vorteilhaft, daß durch Abgreifen aller Wicklungsphasen die Bremsspulenleistung sich gleichmäßig auf alle Phasen verteilt und somit eine Überdimensionierung der Motorzuleitung entfallen kann. Es hat sich herausgestellt, daß eine motorspannungsabhängige Schaltung der Bremse über das Schaltsystem den besonderen Ansprüchen polumschaltbarer Motoren hinsichtlich kleiner Reaktionszeiten der Bremse genügt. Die meßtechnische Erfassung des Motorstroms zur Bremsenabschaltung ist zwar schneller als die erfindungsgemäße Auswertung der Spannung an den Motorwicklungen, aber bei polumschaltbaren Motoren auch nicht erwünscht, da sonst der Motor bei jedem Wechsel der Polzahl in die Bremse fallen würde. Eine geringfügige Verlängerung der Bremsenabfallzeit durch das generatorische Ausklingen der Wicklungsspannung kann in Kauf genommen werden, wenn diese nur exakt an einen möglichst hoch liegenden Punkt unterhalb der Netzspannungstoleranz erfaßt wird.

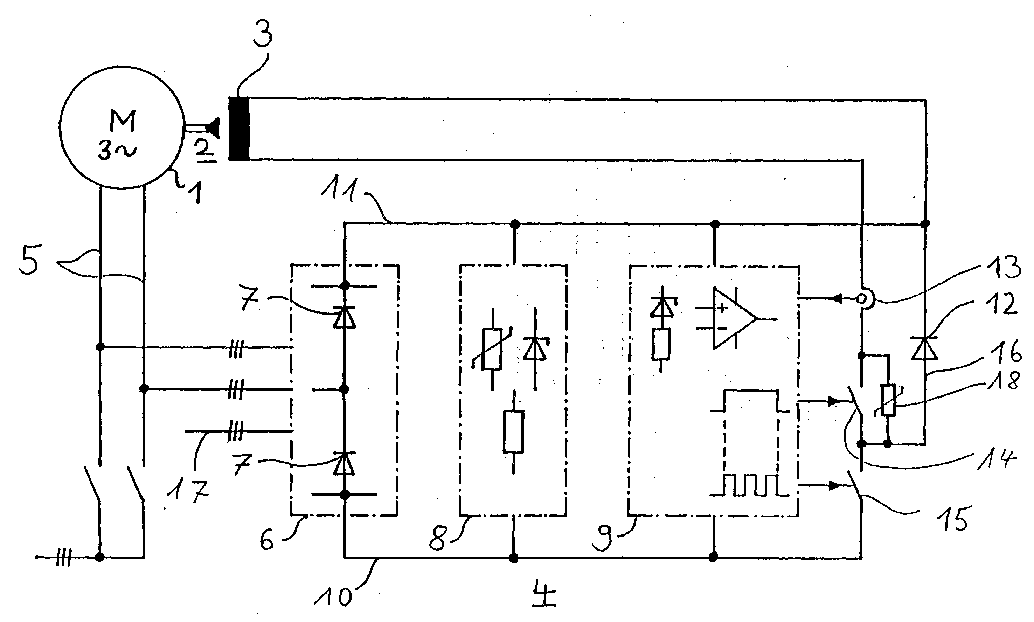

Nachfolgend wird die Erfindung anhand einer Zeichnung näher erläutert. Die Zeichnung zeigt eine erfindungsgemäße Ansteuerschaltung für einen als zweifach polumschaltbaren Drehstrommotor ausgebildeten Elektromotor 1 mit einer Bremse 2. Die Bremse 2 steht im stromlosen Zustand federbelastet im Eingriff mit einem rotierenden Teil des Elektromotors 1. Zur Betätigung bzw. Lüftung der Bremse 2 ist ein Elektromagnet mit einer Spule 3 vorgesehen, die über eine Ansteuerschaltung 4 von der Spannungsversorgung des Elektromotors 1 gespeist wird. Hierzu ist die Ansteuerschaltung 4 eingangsseitig mit den Wicklungsphasen 5 des Elektromotors 1 verbunden. Die Ansteuerschaltung 4 besteht im wesentlichen aus einer eingangsseitig angeordneten und mit den Wicklungsphasen 5 verbundenen Gleichrichterschaltung 6, einer hierzu parallel geschalteten Schutzschaltung 8 und einem ausgangsseitig angeordneten Schaltsystem 9. Die Gleichrichterschaltung 6 ist im wesentlichen aus Gleichrichter-Halbbrücken mit Paaren von Gleichrichterdioden 7 aufgebaut, die jeweils mit den Wicklungsphasen 5 des Elektromotors 1 verbunden sind. Dementsprechend sind bei einem zweifach polumschaltbaren Elektromotor 1 sechs Gleichrichter-Halbbrücken vorgesehen. Die plus- bzw. minusseitigen Enden der Gleichrichter-Halbbrücken sind jeweils miteinander und mit den Minus- 10 und Plusleitungen 11 verbunden. Die Gleichrichterschaltung 6 liefert ohne weiteren Aufwand bei einem Drehspannungssystem eine gut geglättete Gleichspannung.

Die Leitungen 10 und 11 sind mit einer Schutzschaltung 8 verbunden, durch die die Netzspannungsspitzen des Drehspannungssystemes begrenzt werden, um sowohl die Motorwicklungen wie auch das nachfolgende Schaltsystem 9 und die Spule 3 der Bremse 2 zu schützen. Die Schutzschaltung 8 ist in Abhängigkeit von den Anforderungen der Motorenhersteller unterschiedlich aufgebaut und besteht im wesentlichen aus Kombinationen von handelsüblichen Zehnerdioden und Widerständen bzw. von Varistoren und Widerständen und bedarfsweise aus Kondensatoren. Die an den Leitungen 10 und 11 anliegende gleichgerichtete Wicklungsspannung speist neben der zuvor beschriebenen Schutzschaltung 8 auch ein Meß- und Schaltsystem 9 und die Spule 3 der Bremse 2.

Das Schaltsystem 9 steuert zwei elektronische Schaltelemente 14 und 15, die hintereinander in der Minusleitung 10 vor der Spule 3 angeordnet sind. Das Schaltelement 14 ist in einen Freilaufkreis für die Spule 3 eingebunden, wobei der Freilaufkreis durch jeweils einen Abschnitt der Plus- 11 und Minusleitung 10 vor der Spule 3 und einer die Plusleitung 11 über eine in Sperrichtung angeordnete Freilaufdiode 12 mit der Minusleitung 10 verbindenden Freilaufleitung 16 gebildet ist. Hierbei greift die Freilaufleitung 16 zwischen dem Schaltelement 14 im Freilaufkreis und dem Schaltelement 15 an die Minusleitung 10 an. Die Schaltelemente 14 und 15 werden gleichzeitig von dem Schaltsystem 9 zum Lüften bzw. Angreifen der Bremse in Abhängigkeit von der in den Leitungen 10, 11 anliegenden gleichgerichteten Spannung und somit in Abhängigkeit von der am Elektromotor 1 anliegenden Drehspannung ein- bzw. ausgeschaltet. Hierbei liegt die Schwellspannung für diesen Schaltvorgang im Bereich unter der Nennspannung der Drehstromversorgung des Elektromotors 1, wobei die auftretenden Toleranzen durch einen ausreichenden Abstand hiervon berücksichtigt sind. Im Gegensatz zu dem Schaltelement 14 im Freilaufkreis, das beim Lüften der Bremse voll durchschaltet, schaltet das Schaltelement 15 nur zum Lösen der Bremse 2 zunächst voll durch und wird anschließend über eine handelsübliche Taktschaltung getaktet. Der getaktete Betrieb des Schaltelementes 15 erfolgt vorzugsweise pulsweitenmoduliert. Durch diese Betriebsweise des Schaltelementes 15 ist es möglich, die Anlaufspannung in Höhe von etwa 550 Volt für eine Überregung der Spule 3 auf eine Haltespannung in Höhe von etwa 100 Volt herabzusetzen. Die Umschaltung von der Anlaufspannung auf die Haltespannung erfolgt bei einer Vielzahl der Einsatzfälle zeitabhängig. Erfindungsgemäß erfolgt eine Umschaltung etwa nach 80 bis 120 ms. In dem Ausführungsbeispiel erfolgt die Steuerung des Schaltelementes 15 in Abhängigkeit des in der Spule 3 fließenden Stromes. Hierzu ist in der Minusleitung 10 ein insbesondere als Hallsensor ausgebildeter Sensor 13, der den Ist-Wert für die Regelung liefert, angeordnet. Die Ansteuerung der Schaltelemente 14 und 15 erfolgt allgemein über Zehnerdioden oder Komparatoren.

Der zuvor beschriebene Freilaufkries mit der Freilaufdiode 12 dient zur schnellen Entregung der Spule 3. Um die Entregungsgeschwindigkeit der Spule 3 zu erhöhen, ist parallel zu dem Schaltelement 14 ein Varistor 18 angeordnet, mit dem der Freilaufkreis hochohmig geschaltet werden kann. Ferner sind in dem Meß-Schaltsystem 9 nicht in der Zeichnung dargestellte Schutzelemente für die vorzugsweise elektronisch ausgebildeten Schaltelemente 14 und 15 enthalten.

Darüber hinaus wird durch die Verwendung von zwei Schaltelementen 14 und 15 gewährleistet, daß auch im Störungsfall kein Strom mehr fließt und somit die gleichstrombetätigte Bremse ausgeschaltet und somit sicher im Eingriff ist. Für den Fall, daß das Schaltelement 14 durchlässig defekt wird, wird das Schaltelement 15 mit Verzug durch die Freilaufdiode 12 den getakteten niedrigen Wicklungsstrom löschen. Für den anderen Fall, daß das Schaltelement 15 durchlässig defekt wird, fließt ein sehr hoher Wicklungsstrom, der aber durch das Schaltelement 14 bei ebenfalls nur geringem Verzug unterbrochen wird.

Des weiteren ist eine zusätzliche die Gleichrichterschaltung 6 versorgende Drehspannungsleitung 17 vorgesehen, die wiederum auf drei Gleichrichter-Halbbrücken geführt ist, um einen vom Motorbetrieb unabhängigen Testbetrieb der Bremse durchführen zu können.

### Bezugszeichenliste

- 1: Elektromotor
- 2: Bremse
- 3: Spule
- 4: Ansteuerschaltung
- 5: Wicklungsphasen
- 6: Gleichrichterschaltung
- 7: Gleichrichterdioden
- 8: Schutzschaltung
- 9: Meß-Schaltsystem
- 10: Minusleitung
- 11: Plusleitung
- 12: Freilaufdiode
- 13: Sensor
- 14: Schaltelement
- 15: Taktschaltelement
- 16: Freilaufleitung
- 17: Drehspannungsleitung für Testbetriebe
- 18: Varistor

## Patentansprüche

1. Ansteuerschaltung (4) für eine gleichstrombetätigte Bremse (2) eines Elektromotors (1), insbesondere eines polumschaltbaren Drehstrommotors, mit einem eine Spule (3) aufweisenden Elektromagneten zum Lüften der Bremse (2), einer mit der Spannungsversorgung des Elektromotors (1) verbundenen Gleichrichterschaltung (6), die die Spule (3) und ein Schaltsystem (9) mit elektronischen Schaltelementen für die Spule (3) speist, und mit einem Freilaufkreis für die Spule (3), dadurch gekennzeichnet,
daß ein elektronisches Schaltelement (15) für die Spule (3) durch das Schaltsystem (9) derart steuerbar ist, daß beim Einschalten des Elektromotors (1) dieses unter Erzeugung einer Übererregung der Spule (3) voll durchsteuert und nach einer kurzen Zeitspanne von 80-120 ms zur Herabsetzung der Spulenspannung auf eine vorgewählte Spannung pulsweitenmoduliert gesteuert wird, und ein weiteres elektronisches Schaltelement (14) im Freilaufkreis angeordnet ist, das parallel mit dem Schaltelement (15) für die Spule (3) von dem Steuersystem (9) zum schnellen Ein- bzw. Ausschalten der Bremse (2) ansteuerbar ist.

2. Ansteuerschaltung nach Anspruch 1,
dadurch gekennzeichnet,
daß die Gleichrichterschaltung (6) im wesentlichen aus Gleichrichter-Halbbrücken mit jeweils zwei Gleichrichterdioden (7) besteht und jeder Phase der Wicklung des Elektromotors (1) einer Gleichrichter-Halbbrücke zugeordnet ist.

3. Ansteuerschaltung nach Anspruch 2,
dadurch gekennzeichnet,
daß die Gleichrichterdioden (7) der Gleichrichter-Halbbrücken mit ihren Minusleitungen (10) und ihren Plusleitungen (11) jeweils miteinander verbunden und auf eine Schutzschaltung (8) geführt sind.

4. Ansteuerschaltung nach Anspruch 3,
dadurch gekennzeichnet,
daß die Schutzschaltung (8) aus einer Zehnerdioden-Widerstandskombination bzw. aus einer Varistor-Widerstandskombination besteht.

5. Ansteuerschaltung nach einem oder mehreren der Ansprüche 1 bis 4, dadurch gekennzeichnet,
daß das Schaltelement (14) im Freilaufkreis und das Schaltelement (15) für die Spule (3) durch das Schaltsystem (9) nach Über- bzw. Unterschreiten einer Schwellspannung von der an dem Elektromotor (1) anliegenden Spannung parallel ein- bzw. ausschaltbar sind.

6. Ansteuerschaltung nach einem oder mehreren der Ansprüche 1 bis 5, dadurch gekennzeichnet,
daß in dem Schaltsystem (9) ein Zeitglied zur Umschaltung der Durchschaltung des Schaltelements (15) auf dessen Pulsweitenmodulation angeordnet ist.

7. Ansteuerschaltung nach einem oder mehreren der Ansprüche 1 bis 5, dadurch gekennzeichnet,
daß in dem Spulenkreis ein Sensor (13) zur Messung des Stroms der Spule (3) angeordnet ist und mit dem als Istwertgeber über die Pulsweitenmodulation des Schaltelements (15) der Strom der Spule (3) regelbar ist.

8. Ansteuerschaltung nach Anspruch 5,
dadurch gekennzeichnet,
daß die Schwellspannung, die den Abschaltvorgang in dem Schaltsystem (9) bewirkt, unmittelbar unterhalb der Betriebsspannung und außerhalb der Betriebsspannungstoleranzen des Elektromotors (1) liegt.

9. Ansteuerschaltung nach einem oder mehreren der Ansprüche 1 bis 8, dadurch gekennzeichnet,
daß in der Gleichrichterschaltung (6) drei weitere Gleichrichter-Halbbrücken mit Gleichrichterdioden (7) für eine unabhängig von der Spannungsversorgung des Elektromotors (3) anliegenden Drehspannung zur Durchführung eines Testbetriebes der Bremse (2) vorgesehen ist.

10. Ansteuerschaltung nach einem oder mehreren der Ansprüche 1 bis 9, dadurch gekennzeichnet,
daß parallel zu dem Schaltelement (14) ein Varistor (18) geschaltet ist.

## Claims

1. Drive circuit (4) for a d.c.-operated brake (2) of an electromotor (1), in particular of a change-pole three-phase motor, with an electromagnet comprising a coil (3) for releasing the brake (2), a rectifier circuit (6) which is connected to the voltage supply of the electromotor (1) and which feeds the coil (3) and a switching system (9) with electronic switching elements for the coil (3), and with a free-running circuit for the coil (3),
characterised in that an electronic switching element (15) for the coil (3) can be controlled by the switching system (9) such that when the electromotor (1) is turned on it is fully controlled, while producing overexcitation of the coil (3), and after a short period of 80-120 ms is controlled in a pulse-width modulated manner in order to reduce the coil voltage to a preselected value, and a further electronic switching element (14) is disposed in the free-running circuit, which element can be driven in parallel with the switching element (15) for the coil (3) by the control system (9) for rapidly turning the brake (2) on or off.

2. Drive circuit according to claim 1, characterised in that the rectifier circuit (6) essentially consists of half-bridge rectifiers with two rectifier diodes (7) in each case, and a half-bridge rectifier is associated with each phase of the winding of the electromotor (1).

3. Drive circuit according to claim 2, characterised in that the rectifier diodes (7) of the half-bridge rectifiers are in each case connected together by way of their negative wires (10) and their positive wires (11) and connected to a protective circuit (8).

4. Drive circuit according to claim 3, characterised in that the protective circuit (8) consists of a Zener dioderesistor combination or of a varistor-resistor combination.

5. Drive circuit according to one or more of claims 1 to 4, characterised in that the switching element (14) in the free-running circuit and the switching element (15) for the coil (3) can be turned on or off in parallel by the switching system (9) after the voltage applied to the electromotor (1) exceeds or falls below a threshold voltage.

6. Drive circuit according to one or more of claims 1 to 5, characterised in that a timing member is disposed in the switching system (9) for changing the through-connection of the switching element (15) over to its pulse-width modulation mode.

7. Drive circuit according to one or more of claims 1 to 5, characterised in that a sensor (13) is disposed in the coil circuit for measuring the current in the coil (3) and, as an actual value transmitter, enables the current in the coil (3) to be regulated via the pulse-width modulation of the switching element (15).

8. Drive circuit according to claim 5, characterised in that the threshold voltage which gives rise to the circuit-breaking in the switching system (9) lies directly below the operating voltage and outside of the operating voltage tolerances of the electromotor (1).

9. Drive circuit according to one or more of claims 1 to 8, characterised in that three further half-bridge rectifiers with rectifier diodes (7) are provided in the rectifier circuit (6) for a three-phase voltage applied independently of the voltage supply of the electromotor (3) for testing the brake (2).

10. Drive circuit according to one or more of claims 1 to 9, characterised in that a varistor (18) is connected in parallel with the switching element (14).

## Revendications

1. Circuit d'amorçage (4) pour un frein (2) actionné par du courant continu, d'un moteur électrique (1), en particulier un moteur à courant alternatif triphasé à nombre de pôles variable, comportant un électroaimant muni d'une bobine (3) pour l'aération du frein (2), un circuit redresseur (6) relié à l'alimentation en tension du moteur électrique (1), et alimentant la bobine (3) et un système de commutation (9) muni d'éléments de commutation électroniques pour la bobine (3), et un circuit libre pour la bobine (3),
caractérisé en ce qu'un élément de commutation électronique (15) pour la bobine (3) peut être commandé par le système de commutation (9) de sorte que, lors de la mise en service du moteur électrique (1), celui-ci est totalement utilisé, par la génération d'une surexcitation de la bobine (3), et après une courte durée de 80 à 120 millisecondes, est commandé, par modulation de largeur d'impulsion, pour la réduction de la tension de la bobine, à une tension présélectionnée, et un autre élément de commutation électronique (14) est agencé dans le circuit libre, élément de commutation électronique qui peut être commandé, parallèlement à l'élément de commutation (15) pour la bobine (3), par le système de commande (9) pour la mise en ou hors service rapide du frein (2).

2. Circuit d'amorçage selon la revendication 1,
caractérisé en ce que le circuit redresseur (6) est réalisé essentiellement à partir de demi-ponts redresseurs comportant à chaque fois deux diodes redresseuses (7), et à chaque phase du bobinage du moteur électrique (1) est associé un demi-pont redresseur.

3. Circuit d'amorçage selon la revendication 2,
caractérisé en ce que les diodes redresseuses (7) des demi-ponts redresseurs sont reliées ensemble par leurs liaisons négatives (10) et leurs liaisons positives (11), respectivement, et sont guidées sur un circuit de protection (8).

4. Circuit d'amorçage selon la revendication 3,
caractérisé en ce que le circuit de protection (8) est constitué d'une combinaison résistante à diodes Zehner ou d'une combinaison résistante à varistor.

5. Circuit d'amorçage selon l'une ou plusieurs des revendications 1 à 4,
caractérisé en ce que l'élément de commutation (14) dans le circuit libre et l'élément de commutation (15) pour la bobine (3) peuvent être mis en ou hors service parallèlement, par le système de commutation (9) lors du dépassement par le haut ou par le bas d'une tension de seuil par la tension existant sur le moteur électrique (1).

6. Circuit d'amorçage selon l'une ou plusieurs des revendications 1 à 5,
caractérisé en ce que, dans le système de commutation (9), est agencé un relais de temporisation pour la commutation de la mise en communication de l'élément de commutation (15) sur sa modulation de largeur d'impulsion.

7. Circuit d'amorçage selon l'une ou plusieurs des revendications 1 à 5,
caractérisé en ce que, dans le cercle à bobine, est agencé un capteur (13) pour mesurer le courant de la bobine (3), par lequel peut être réglé le courant de la bobine (3) comme émetteur de valeurs effectives, par l'intermédiaire de la modulation de largeur d'impulsion de l'élément de commutation (15).

8. Circuit d'amorçage selon la revendication 5,
caractérisé en ce que la tension de seuil qui engendre le processus de mise hors service dans le système de commutation (9), est située directement au-dessous de la tension de fonctionnement et à l'extérieur des tolérances de la tension de fonctionnement du moteur électrique (1).

9. Circuit d'amorçage selon l'une ou plusieurs des revendications 1 à 8,
caractérisé en ce que l'on prévoit dans le circuit redresseur (6), trois autres demi-ponts redresseurs munis de diodes redresseuses (7) pour une tension triphasée existant indépendamment de l'alimentation en tension du moteur électrique, pour la mise en oeuvre d'un test de fonctionnement du frein (2).

10. Circuit d'amorçage selon l'une ou plusieurs des revendications 1 à 9,
caractérisé en ce qu'un varistor (18) est monté parallèlement à l'élément de commutation (14).
